Europäisches Patentamt

(19) European Patent Office

Office européen des brevets

(11) Numéro de publication: **0 006 393**
**B1**

# FASCICULE DE BREVET EUROPEEN

(45) Date de publication du fascicule de brevet: 27.01.82

(51) Int. Cl.³: **F 24 J 3/02**

(21) Numéro de dépôt: **79420027.9**

(22) Date de dépôt: **07.06.79**

(54) **Capteur solaire.**

(30) Priorité: **09.06.78 FR 7817860**

(43) Date de publication de la demande: **09.01.80 Bulletin 80/1**

(45) Mention de la délivrance du brevet: **27.01.82 Bulletin 82/4**

(84) Etats contractants désignés: **AT BE CH DE GB IT LU NL SE**

(56) Documents cités:
**DE-A-2 703 212**
**FR-A-2 158 425**
**FR-A-2 262 584**
**FR-A-2 315 670**
**FR-A-2 330 974**
**FR-A-2 319 857**
**FR-A-2 357 832**
**FR-A-2 399 630**
**US-A-3 029 806**

(73) Titulaire: **PHENOL ENGINEERING Société à responsabilité limitée dite:, 35, rue du Tonkin, F-69100 Villeurbanne (FR)**

(72) Inventeur: **Busschaert, Bruno Jean-Marie, 21, cours Franklin Roosevelt, Lyon 6ème - Rhône (FR)**
Inventeur: **Schwob, Alain Louis Charles, 9, rue Alphonse Daudet, Meyzieu - Rhône (FR)**
Inventeur: **Ivorra, Claude Armand Marcel, 1, avenue Léon Blum, Decines - Rhône (FR)**

(74) Mandataire: **Maureau, Bernard et al, Cabinet GERMAIN & MAUREAU Le Britannia - Tour C 20, Boulevard Eugène Déruelle, F-69003 Lyon (FR)**

Capteur solaire

La présente invention concerne un perfectionnement aux capteurs solaires selon le préambule de la revendication 1 et correspondant essentiellement à ceux du type décrit dans les documents FR-A-2 399 630 et FR-A-2 319 857.

Le capteur solaire décrit dans le brevat FR-A-2 399 630 est constitué par une structure porteuse en matière thermiquement isolante en forme de panneau plan rectangulaire, un absorbeur fixé à cette structure et relié à une installation de chauffage par des canalisations de raccordement traversant la dite structure et un couvercle transparent en forme de coquille apte à recouvrir la structure en servant de logement à l'absorbeur précité, et fixé à la structure porteuse par tout moyen approprié.

Comme indiqué dans ce brevet, ce capteur présente l'avantage d'être d'un prix de revient moins élevé que ceux antérieurement connus. La présente invention vise à diminuer encore ce prix de revient sans nuire au rendement du capteur.

A cet effet, suivant le perfectionnement qu'elle concerne, la plaque de mousse phénolique est recouverte par une feuille en matériau thermiquement isolant et résistant à la chaleur et sur . laquelle repose l'absorbeur, l'assemblage des deux coquilles est réalisé à l'aide d'un joint d'étanchéité souple la feuille en matériau thermiquement isolant et résistant à la chaleur est constituée par un carton-cuir, c'est-à-dire un carton constitué de fibres de cellulose liées par des liants organiques, tels que du butadiène, et la coquille extérieure de la structure porteuse est réalisée en acrilonitrile-butadiène-styrène (ABS).

Cette disposition présente l'avantage, par rapport à celles décrites dans les brevet précités d'absorber les écarts de dilatation dûs aux différences d'échauffement sans nuire à l'étanchéité et au rendement du capteur.

Notamment, en ce qui concerne le document FR-A-2 319 857, il est remarqué que les bords du capteur sont pris en sandwich entre les bords des coquilles et que le joint d'assemblage est rigide, ce qui retire à ce capteur tous les avantages de celui de la présente demande.

Avantageusement, le rebord périphérique de chaque coquille comprend une partie plane située dans le plan de l'ouverture de la coquille considérée et bordée par une levre inclinée de manière à s'éloigner du plan précite

Ainsi, pour l'assemblage de la structure porteuse et du couvercle d'un capteur, il suffit d'engager sur les rebords appliqués l'un contre l'autre des deux coquilles de ce capteur, un joint d'étanchéité en caoutchouc ou similaire de section sensiblement carrée ou rectangulaire et présentant une gorge de section sensiblement en T.

Ce type d'assemblage présente l'avantage de tolérer un certain glissement d'un rebord par rapport à l'autre ce qui diminue considérablement les risques de ruptures dûs aux différences de dilatation elles-mêmes dûes aux différences d'échauffement.

Cette disposition permet en outre d'assembler de manière étanche deux capteurs selon l'invention à l'aide de brides doubles.

De préférence, pour permettre la création de vide d'air entre le joint d'assemblage et les coquilles d'un capteur, tout en contribuant à l'obtention d'une meilleure étanchéité, suivant une forme d'exécution avantageuse de l'invention, chaque aile du joint d'assemblage présente une lèvre souple appliquée contre la paroi latérale de la coquille correspondante.

Suivant encore une autre caractéristique de l'invention, la coquille constituant le couvercle de ce capteur est réalisée en polycarbonate, ce matériau présentant l'avantage de piéger les rayons infra-rouges éventuellement réémis par l'absorbeur et qui sont d'une longueur d'ondes différente de ceux émis par le soleil.

Par cette disposition, on améliore encore le rendement de ce capteur.

De toute façon, l'invention sera bien comprise à l'aide de la description qui suit en référence au dessin schématique annexé, représentant à titre d'exemple non limitatif, une forme d'exécution du capteur selon l'invention:

Figure 1 en est une vue en coupe transversale;

Figure 2 est, à échelle agrandie, une vue partielle en coupe transversale de la zone d'assemblage des deux coquilles d'un capteur;

Figure 3 est une vue partielle similaire à figure 2 montrant un mode d'assemblage de deux capteurs juxtaposés.

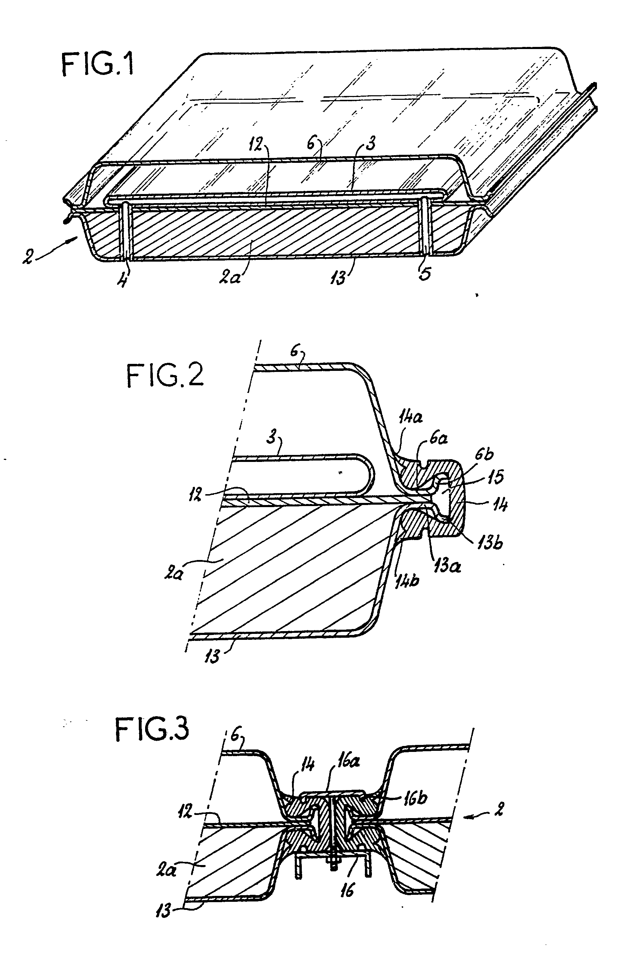

Comme le montre notamment la figure 1, la structure porteuse 2 en matière thermiquement isolante et ayant la forme d'un panneau plat rectangulaire en vue de supporter un absorbeur 3, est constituée par une plaque de mousse de matière thermiquement isolant et résistant à la chaleur et une coquille extérieure 13 de même forme que la coquille 6 constituant le couvercle de ce capteur. Les tubulures d'entrée 4 et de sortie 5, traversent la structure porteuse 2, c'est-à-dire la feuille 12, la plaque de mousse phénolique 2a et la coquille 13.

Par cette disposition, on facilite encore la réalisation de la structure porteuse de ce capteur puisqu'il suffit de réaliser une coquille 13, à l'aide du même moule que celui utilisé pour la réalisation du couvercle transparent 6 et de couler dans cette coquille 13 la plaque de mousse phénolique 2a qui est ensuite recouverte de la feuille 12. La coquille 13 est constituée en acrilonitrile-butadiène-styrène (ABS).

La feuille 12 est réalisée en carton, composé de fibres de cellulose liées par des liants organiques tels que le butadiène, et distribué dans le commerce sous la marque CELLODERM

Chaque coquille 6 ou 13 est munie d'un rebord périphérique facilitant leur assemblage et de

préférence la feuille 12 est prolongée de manière à être fixée entre les rebords des coquilles 6 et 13.

La figure 2 montre, à échelle agrandie, une forme d'exécution avantageuse de ce rebord périphérique des coquilles 6 et 13; dans cette forme d'exécution, le rebord de chaque coquille 6 ou 13 comprend une partie plane respectivement 6a et 13a située dans le plan d'ouverture de la coquille considérée et bordée par une lèvre respectivement 6b et 13b inclinés de manière à s'éloigner du plan précité qui constitue aussi le plan de joint des deux coquilles 6 et 13.

La figure 2 montre un mode d'assemblage des coquilles 6 et 13 à l'aide d'un joint d'étanchéité 14 de section sensiblement carrée et présentant une gorge longitudinale 15 de section en T apte à être engagée sur les rebords 6a, 6b, et 13a, 13b des coquilles 6 et 13.

Cette solution présente non seulement l'avantage de permettre la réalisation d'un assemblage simple, mais en outre, celui d'admettre des déplacements relatifs entre les deux coquilles 6 et 13 qui subissent des dilatations différentes en raison des températures différentes auxquelles elles sont soumises. Il faut noter, en outre, que les chocs thermiques provoqués par le passage de nuages sur la coquille 6 qui constitue le couvercle du capteur, peuvent être brutaux et la tolérance de mouvements relatifs entre les deux coquilles présente l'avantage important de diminuer les risques de rupture. En effet, si la forme en coquille du couvercle 6 déjà décrite dans le brevet français précité FR-A-2 399 630, présente l'avantage de faciliter les déformations dues aux phénomène de dilatation de la matière, l'assemblage des deux coquilles 6 et 13 à l'aide du joint 14 permet un glissement du rebord d'une coquille par rapport à celui de l'autre, ce qui a seulement pour effet d'entraîner une déformation passagère du joint 14.

Suivant une autre caractéristique intéressante de l'invention, chaque aile du joint 14 porte le long de son bord libre, une lèvre souple et très déformable 14a, qui, en étant appliquée contre la paroi de la coquille correspondante 6 ou 13, contribue à améliorer l'étanchéité du capteur. Cette étanchéité est utile car elle évite la pénétration d'air humide sous le couvercle 6 du capteur ce qui est intéressant puisque, l'air humide étant meilleur conducteur de la chaleur que l'air sec, faciliterait la redispersion des calories reçues par l'absorbeur 3.

Un autre avantage lié à cette forme du joint 14 réside dans la présence de formation de vide d'air dans la gorge 15 ainsi que le long des lèvres 14a, ce qui diminue encore la déperdition de calories à la périphérie du capteur.

Enfin, suivant encore une autre caractéristique de l'invention, le couvercle 6 est réalisé en un polycarbonate.

Ce produit a en effet la propriété d'arrêter certains rayons infra-rouges, et il se trouve que les infra-rouges auxquels il constitue une barrière sont ceux dont la longueur d'ondes correspond à ceux émis par l'absorbeur 3 et non à ceux émis par le soleil.

Ainsi, le couvercle 6 présente donc l'avantage de laisser passer les infra-rouges émis par le soleil et qui sont utiles pour l'échauffement du fluide véhiculé dans l'absorbeur, mais par contre il corrige à l'intérieur du capteur les infra-rouges émis par l'absorbeur 3 éliminant ainsi un risque de dissipation calorifique supplémentaire.

La figure 3 montre un mode d'assemblage de deux capteurs juxtaposés. Ce mode d'assemblage consiste à serrer entre des brides doubles 16, les joints 14 correspondant aux bords adjacents de deux capteurs juxtaposés. Ainsi, il est possible de réaliser une liaison étanche entre les capteurs juxtaposés; il suffit pour cela de procurer aux ailes 16a de la bride double supérieure, un bourrelet de bordure 16b qui en pénétrant légèrement dans l'un des joints 14 assurera l'étanchéité souhaitée.

**Revendications**

1. Capteur solaire du type constitué par une structure porteuse (2) en matière thermiquement isolante en forme de panneau plan rectangulaire, un absorbeur (3) fixé à cette structure et relié à une installation de chauffage par des canalisations de raccordement (4, 5) traversant ladite structure et un couvercle transparent (6) en forme de coquille apte à recouvrir la structure (2) en servant de logement à l'absorbeur (3) précité, et fixe à la structure porteuse (2) par tout moyen approprié, cette dernière comprenant une plaque de mousse phénolique (2a) logée dans une coquille extérieure (13) en matière plastique appropriée, la coquille extérieure (13) ainsi que celle (6) constituant le couvercle du capteur étant munies chacune d'un rebord périphérique (13a, 6a) permettant leur assemblage, caractérisé en ce que la plaque de mousse phénolique (2a) est recouverte par une feuille (12) en matériau thermiquement isolant et résistant à la chaleur et sur laquelle repose l'absorbeur (3), en ce que l'assemblage des deux coquilles (6, 13) est réalisé à l'aide d'un joint d'étanchéité souple (14), en ce que la feuille (12) en matériau thermiquement isolant et résistant à la chaleur est constituée par un carton-cuir, c'est-à-dire un carton constitué de fibres de cellulose liées par des liants organiques, tels que du butadiène, et en ce que la coquille extérieure (13) de la structure porteuse (2) est réalisée en acrilonitrile-butadiène-styrène (ABS).

2. Capteur selon la revendication 1, caractérisé en ce que la feuille (12) thermiquement isolante et résistant à la chaleur est munie d'un prolongement périphérique apte à être fixé entre les rebords des deux coquilles (6, 13).

3. Capteur selon la revendication 1 ou la revendication 2, caractérisé en ce que le rebord périphérique de chaque coquille (6, 13) comprend une partie plane (6a, 13a) située dans le plan d'ouverture de la coquille considérée et bordée par une lèvre (6b, 13b) inclinée de manière à s'éloigner du plan précité.

4. Capteur selon la revendication 3, caractérisé en ce que le joint d'étanchéité (14) utilisé pour l'assemblage des deux coquilles (6, 13) est du type à section rectangulaire ou carrée, présentant une gorge longitudinale (15) de section sensiblement en T.

5. Capteur selon la revendication 4, caractérisé en ce que chaque aile du joint d'assemblage (14) présente une lèvre souple (14a, 14b) appliquée contre la paroi latérale de la coquille correspondante (6, 13).

6. Capteur selon l'une quelconque des revendications précédentes, caractérisé en ce que la coquille (6) constituant son couvercle est réalisée en un polycarbonate.

7. Structure constituée d'une pluralité de capteurs selon l'une quelconque des revendications précédentes, caractérisée en ce que leur assemblage étanche est réalisé à l'aide de brides doubles (16) engagées sur les joints d'étanchéité adjacents (14) de deux capteurs juxtaposés.

## Patentansprüche

1. Solarenergiesammler, bestehend aus einer Tragstruktur (2) aus thermisch isolierendem Material in Form einer ebenen, rechteckigen Tafel, einem Absorber (3), der an der Tragstruktur befestigt und mit einer Heizinstallation durch Anschlußleitungen (4, 5) verbunden ist, die die Tragstruktur durchqueren, sowie aus einem transparenten Deckel (6) in Form einer die Tragstruktur (2) überdeckenden Schale, der als Aufnahme für den vorgenannten Absorber (3) dient und durch jedes geeignete Mittel an der Tragstruktur (2) befestigt ist, welch letztere eine Tafel aus Phenolschaum (2a) aufweist, die in einer äußeren Schale (13) aus geeignetem Kunststoffmaterial angeordnet ist, wobei die äußere Schale (13) sowie die den Deckel des Sammlers bildende Schale (6) jede mit einem Umfangsrand (13a, 6a) versehen sind, der ihre gegenseitige Verbindung erlaubt, dadurch gekennzeichnet, daß die Tafel aus Phenolschaum (2a) mit einem Blatt (12) aus thermisch isolierendem und hitzebeständigem Material überdeckt ist, auf dem der Absorber (3) ruht, daß die gegenseitige Verbindung der beiden Schalen (6, 13) mit Hilfe eines verformbaren Dichtelements (14) verwirklicht ist, daß das Blatt (12) aus einem thermisch isolierenden und hitzebeständigen Material aus einem Lederkarton gebildet ist, d. h. einem Karton, der aus Cellulosefasern besteht, die durch organische Bindemittel, wie beispielsweise Butadien, verbunden sind, und daß ferner die äußere Schale (13) der Tragstruktur (2) aus Acrylonitril-Butadien-Styrol (ABS) gebildet ist.

2. Sammler nach Anspruch 1, dadurch gekennzeichnet, daß das thermisch isolierende und hitzebeständige Blatt (12) an seinem Umfang eine Verlängerung aufweist, die zwischen den Rändern der beiden Schalen (6, 13) festgelegt werden kann.

3. Sammler nach Anspruch 1 oder 2, dadurch gekennzeichnet, daß der Umfangsrand einer jeden Schale (6, 13) einen ebenen Abschnitt (6a, 13a) aufweist, der in der Öffnungsebene der betroffenen Schale liegt und der von einer Lippe (6b, 13b) begrenzt wird, die so geneigt liegt, daß sie sich aus der genannten Ebene entfernt.

4. Sammler nach Anspruch 3, dadurch gekennzeichnet, daß das für die gegenseitige Verbindung der beiden Schalen (6, 13) benutzte Dichtelement (14) ein solches mit einem rechteckigen oder quadratischen Querschnitt ist, das eine Längsnut (15) von im wesentlichen T-förmigem Querschnitt aufweist.

5. Sammler nach Anspruch 4, dadurch gekennzeichnet, daß jeder Flügel des verbindenden Dichtelementes (14) eine verformbare Lippe (14a, 14b) aufweist, die an der Seitenwand der entsprechenden Schale (6, 13) anliegt.

6. Sammler nach einem der vorhergehenden Ansprüche, dadurch gekennzeichnet, daß die seinen Deckel bildende Schale (6) aus einem Polycarbonat besteht.

7. Struktur, bestehend aus einer Mehrzahl von Sammlern nach einem der vorhergehenden Ansprüche, dadurch gekennzeichnet, daß ihre dichte Verbindung untereinander mit Hilfe von Doppelflanschen (16) gebildet ist, die die aneinander grenzenden Dichtelemente (14) zweier nebeneinander angeordneter Sammler beaufschlagen.

## Claims

1. Solar transducer of the type consisting of a carrying structure (2) made from a heat insulating material in the form of a flat rectangular panel, an absorber (3) fixed to this structure and connected to a heating installation by connecting pipework (4, 5) crossing the said structure and a transparent cover (6) in the form of a shell which is suitable for covering the structure (2) which serves as a housing for the above mentioned absorber (3), and fixed to the carrying structure (2) by any suitable means, the latter including a plate made from phenol foam (2a) housed in an outer shell (14), made from suitable plastics material, the outer shell (13) as well as the shell (6) which forms the cover of the transducer being each equipped with a peripheral rim (13a, 6a), which makes their assembly possible, characterised by the fact that the phenol foam plate (2a) is covered by a sheet (12) made from heat insulating and heat resistant material and on which rests the absorber (3), by the fact that the assembly of the two shells (6, 13) is achieved by means of a flexible hermetic seal (14), and by the fact that the sheet (12) made from heat insulating and heat resistant material consists of leather board, that is, a cardboard consisting of cellulose fibres connected by organic binding materials such as butadiene, and by the fact that the outer shell (13) of the carrying structure (2) is made from acrylonitrile-butadiene-styrene (ABS).

2. Transducer according to claim 1, characterised by the fact that the heat insulating and heat resistant sheet (12) is equipped with a peripheral extension which is suitable for being fixed between the rims of the two shells (6, 13).

3. Transducer according to claim 1 or claim 2, characterised by the fact that the peripheral flange of each shell (6, 13) includes a flat part (6a, 13a) situated in the opening plane of the shell in question and edged by a lip (6b, 13b) which is tilted in such a manner as to move away from the above mentioned plane.

4. Transducer according to claim 3, characterised by the fact that the hermetic seal (14) used for assembling the two shells (6, 13), is of the type with a rectangular or square cross section, which has a longitudinal throat (15) of approximately T cross section.

5. Transducer according to claim 4, characterised by the fact that each wing of the assembly seal (14) has a flexible lip (14a, 14b) applied against the lateral wall of the corresponding shell (6, 13).

6. Transducer according to any of the above claims, characterised by the fact that the shell (6) which forms its cover is made from a polycarbonate.

7. Structure consisting of several transducers according to any of the above claims, characterised by the fact that their hermetic assembly is made by means of double flanges (16) engaged on the adjacent hermetic seal (14) of two transducers placed side by side.

## FIG.1

## FIG.2

## FIG.3